# EUROPÄISCHE PATENTSCHRIFT

(11) **EP 2 403 903 B1**
(45) Veröffentlichungstag und Bekanntmachung des Hinweises auf die Patenterteilung: **11.12.2013**
(21) Anmeldenummer: 10706626.8
(22) Anmeldetag: 02.03.2010
(51) Int. Cl.: C08K 5/00, C08K 3/00, C08K 3/32

(54) **STRAHLUNG ABSORBIERENDES MATERIAL**
RADIATION-ABSORBING MATERIAL
MATÉRIAU ABSORBANT UN RAYONNEMENT

(30) Priorität: 04.03.2009 DE 102009001335
(43) Veröffentlichungstag der Anmeldung: 11.01.2012
(73) Patentinhaber: Chemische Fabrik Budenheim KG, 55257 Budenheim (DE)
(72) Erfinder: WERMTER, Hendrik, 65346 Eltville (DE); WISSEMBORSKI, Rüdiger, 55435 Gau-Algesheim (DE); JANSSEN, Thomas, 55130 Mainz (DE)
(74) Vertreter: WSL Patentanwälte Partnerschaftsgesellschaft
(86) Internationale Anmeldenummer: PCT/EP2010/052628
(87) Internationale Veröffentlichungsnummer: WO 2010/100153

(56) Entgegenhaltungen:
- EP-A1- 0 542 115
- EP-A1- 0 697 433
- WO-A1-2005/052049
- WO-A1-2006/042623

## Beschreibung

### Gegenstand der Erfindung

Die Erfindung betrifft ein Strahlung absorbierendes kunststoffbasierendes Material, bestehend aus wenigstens einer Polymermatrix mit einem darin enthaltenen Absorbermaterial oder Gemisch von Absorbermaterialien.

### Hintergrund der Erfindung

Verpackungen für Handelsprodukte aller Art, z. B. auch Lebensmittel, bestehen häufig vollständig oder teilweise aus Polymermaterial (Kunststoff). Durch die Verpackung werden oft mehrere Stücke einzelner Produkte oder eine Anzahl verschiedener Produkte oder Produktteile gebündelt oder zusammengehalten. Flüssige Lebensmittel, wie Getränke, Öl, Suppen, Obst- und

Gemüsekonserven mit Flüssigkeitsanteil, aber auch nicht zu den Lebensmitteln zählende Flüssigkeiten, wie z. B. Reinigungs- und Pflegemittel für den Haushalt, Arzneimittel, Maschinenöle und vieles mehr, werden in Kunststoffbehältern aufbewahrt und in den Handel gebracht, wie z. B. in Flaschen, Kanistem und Dosen. Neben der Aufbewahrung der Produkte ist ein weiterer wesentlicher Grund für die Verwendung von Verpackungen der Schutz der Produkte gegen Verschmutzung, Beschädigung etc. Häufig sind die Verpackungen zu einem Teil oder vollständig transparent, damit das darin untergebrachte Produkt sichtbar ist.

Produktverpackungen sind häufig künstlichem Licht oder Tageslicht und oft auch starker Sonneneinstrahlung ausgesetzt. Darunter können sowohl die Produkte als auch die Verpackung leiden. Licht- und Sonnenstrahlung führen zum Erwärmen der verpackten Produkte, was besonders bei Lebensmitteln häufig die Haltbarkeit stark beeinträchtigt. Durch die Erwärmung kann es zu verstärktem Wachstum von Bakterien, Pilzen und Hefen kommen, und die Strahlung kann auch eine Veränderung der Lebensmittel durch Oxidationsprozesse fördern. Neben der Genießbarkeit der Lebensmittel wirkt sich die verstärkte Belastung durch Licht und Wärme auch oft auf die äußerliche Erscheinung und die Konsistenz der Produkte nachteilig aus.

Des weiteren wirkt sich Licht- und Sonnenbestrahlung häufig auch nachteilig auf die Verpackung selbst und darin untergebrachte Produkte, die keine Lebensmittel sind, aus. So kann die Bestrahlung zu Verfärbungen des Kunststoffs führen oder diesen mit der Zeit spröde, brüchig oder hart machen. Polymermaterialien können, wenn sie beispielsweise für eine längere Zeit direktem Sonnenlicht ausgesetzt sind, durch photoinduzierte Oxidation abgebaut werden. Eine Folge dieses Abbaus können z. B. Quervernetzungen, Versprödung, Ausbleichen und teilweise damit einhergehender Verlust der mechanischen Eigenschaften sein. Die Kunststoffmaterialien altern unter der Strahlenbelastung schneller.

Die Strahlung, die sich auf die Verpackung und / oder verpackte Produkte besonders schädigend auswirkt, ist überwiegend Strahlung im ultravioletten Bereich und im infraroten Bereich des Spektrums, d. h. energiereiche UV-Strahlung und / oder IR-Wärmestrahlung.

Auch Kunstofffenster, Dächer, Lärmschutzwälle etc. umfassen häufig transparente Bauteile, die aus Materialien bestehen, die bis zu einem gewissen Grad empfindlich gegen UV-Strahlung sind, wie z. B. Polycarbonat oder PMMA, und somit durch UV-Stabilisatoren geschützt werden müssen. Gerade bei Dächern und Fenstern besteht häufig die Anforderung, dass sie Räume gegen Wärmeübertritt isolieren, d.h. Wärmestrahlung nicht hindurch treten lassen. Dazu werden heute bereits IR-Absorber bzw. Reflektoren in die Polymermatrix eingebracht. Des weiteren sollen insbesondere Dächer zudem vor dem Befall von Grünbewuchs bzw. Pilzen geschützt werden.

Es wäre daher vorteilhaft, ein Polymermaterial, welches z. B. für die Herstellung von Verpackungen verwendet wird, derart auszurüsten oder zu verändern, dass es in hohem Maße UV-Strahlung und / oder IR-Strahlung zurückhält, so dass eine Schädigung des Materials selbst und / oder eines hinter dem Material befindlichen Produkts durch die Strahlung vermindert wird.

Gleichzeitig sollte die Ausrüstung oder Veränderung des Polymermaterials Licht aus dem sichtbaren Bereich des Spektrums möglichst nicht oder nur in geringem Maße zurückhalten, um die Herstellung von transparentem (durchsichtigem) Polymermaterial zu ermöglichen, wie es vielfältig für Verpackungen eingesetzt wird, damit das Produkt von Außen sichtbar ist (hohe Transparenz).

Des weiteren sollte die Ausrüstung oder Veränderung des Polymermaterials möglichst wenig unerwünschte Eigenfärbung mit sich bringen oder eine Trübung des Polymermaterials bewirken. Das Polymermaterial sollte in seiner Verarbeitbarkeit und seinen Materialeigenschaften möglichst nicht oder nicht in erheblichem Maße beeinträchtigt werden. Außerdem sollte das ausgerüstete oder veränderte Polymermaterial, insbesondere wenn es im Lebensmittelbereich eingesetzt wird, keine gesundheitsgefährdenden oder den geschmacksbeeinflussenden Stoffe abgeben. Dies gilt beispielsweise auch besonders für Gegenstände, mit denen Menschen und Tiere, insbesondere Babys und Kleinkinder, in Kontakt kommen, wie z.B. Spielwaren.

Die WO-A-03/033582 beschreibt ein Mittel zur Absorption von UV-Strahlung auf der Basis von gemischtem Cer- und Titanphosphat für die Einarbeitung in ein Polymermaterial.

Die EP-A-1 666 927 beschreibt eine Infrarotstrahlung absorbierende Sonnenschutzfolie aus einem Polyesterfilm mit einer optisch klaren Metallbedampfung oder Metallbesputterung. Die Metallbeschichtung reflektiert die einstrahlende Sonnenenergie und lässt kontrastreiches, gedämpftes Licht einfallen

Die US-A-20050277709 beschreibt mehrschichtige Glasverbundmaterialien, welche im Bereich des infraroten (IR) und nahen infraroten (NIR) Lichts absorbieren. Der Glasverbund enthält dielektrische Kerne aus der Gruppe Titandioxid, Siliciumdioxid, kolloidales Siliciumdioxid, Goldsulfid, Polymethylmethacrylate und Polystyol.

Die US-A-7258923 beschreibt mehrlagige Gegenstände mit einer innersten Schicht aus einem thermoplastischen Polymer, welches IR-absorbierende Additive enthält, die unter Boriden der Übergangsmetalle und der Lanthanide ausgewählt sind.

Die US-A-5830568 beschreibt ein Verbundglas mit einer Zwischenschicht aus PVB oder Ethylvinylacetat-Copolymer mit darin für eine Lichtabsorption dispergierten funktionalen ultrafeinen Metalloxidpartikeln.

Die US-A-6620872 beschreibt eine PVB-Folie, die zur Absorption von IR-Strahlung eine effektive Menge Lanthanidboride und mindestens Zinnoxid oder Antimonzinnoxid enthält.

Die EP-A-0 371 949 beschreibt ein Sonnenschutz-Verbundglas mit mindestens einer reflektierenden Schicht aus Metall, die nicht mehr als 2% im sichtbaren Bereich reflektiert. Die angrenzende Schicht enthält ein dielektrisches Material, ausgewählt unter Oxiden von Cr, Ta, W, Zn, Al, In und Ti sowie ZnS.

Die EP-A-1 640 348 beschreibt die Herstellung einer laminaren Struktur mit starker Filterwirkung für Sonnenstrahlung.

Anorganische Absorbermaterialien für UV-Strahlung sind im Gegensatz zu organischen Absorber-Systemen bei hoher Dosierung zum Erzielen einer ausreichenden Absorptionswirkung im relevanten Wellenlängenbereich häufig mit dem Problem behaftet, dass sie aufgrund der hohen Dosierung keine ausreichende Transparenz mehr besitzen, so dass die das Absorbermaterial enthaltende Matrix meist stark gefärbt oder getrübt wird.

Organische Absorbermaterialien haben häufig den Nachteil, dass sie thermisch instabil sind und bei der Einarbeitung in ein Polymermaterial oder dessen Weiterverarbeitung, was häufig in der Schmelze oder im thermisch erweichtem Zustand bei üblicherweise über 200°C erfolgt, zersetzt werden.

### Aufgabe

Die Aufgabe der Erfindung bestand darin, ein Strahlung absorbierendes, kunststoffbasierendes Material bereitzustellen, das
sich unter anderem als Verpackungsmaterial für Handelsprodukte, insbesondere Lebensmittel, oder kosmetische Mittel eignet,
- in hohem Maße UV-Strahlung und / oder IR-Strahlung zurückhält oder absorbiert,
- gleichzeitig Licht aus dem sichtbaren Bereich des Spektrums möglichst nicht oder nur in geringem Maße zurückhält oder absorbiert,
- möglichst keine unerwünschte Eigenfärbung oder eine Trübung des Polymermaterials aufgrund des Absorbermaterials aufweist,
- eine gute Verarbeitbarkeit und gute Materialeigenschaften besitzt und
- keine gesundheitsgefährdenden Stoffe aufgrund des Absorbermaterials abgibt.

### Beschreibung der Erfindung

Gelöst wird diese Aufgabe durch ein Strahlung absorbierendes, kunststoffbasierendes Material, bestehend aus einer Polymermatrix mit einem darin enthaltenen Absorbermaterial oder Gemisch von Absorbermaterialien, wobei das Absorbermaterial oder Gemisch von Absorbermaterialien unter Phosphaten, kondensierten Phosphaten, Phosphonaten, Phosphiten und gemischten Hydroxid-Phosphat-Oxoanionen von Kupfer (Cu), Zinn (Sn), Calcium (Ca) und/oder Eisen (Fe) ausgewählt ist und in der Polymermatrix fein verteilt, dispergiert oder gelöst vorliegt.

Die erfindungsgemäßen kunststoffbasierenden Materialien absorbieren sehr gut UV-Strahlung und / oder IR-Strahlung. Gleichzeitig beeinträchtigen die in das Polymermaterial eingearbeiteten Absorbermaterialien die Transparenz der Polymermaterialien im sichtbaren Bereich des Spektrums nicht wesentlich.

Die Polymermaterialien mit den erfindungsgemäßen Absorbermaterialien eignen sich daher beispielsweise besonders zur Herstellung von Verpackungsmaterialien, z. B. Verpackungsfolien, Blisterverpackungen, Kunststoffdosen, Getränkeflaschen, wie PET-Flaschen, usw.

Auch Medizinprodukte oder Kunststoffrohre können mit Vorteil aus dem erfindungsgemäßen Material hergestellt werden.

In einer Ausführungsform der Erfindung ist das Absorbermaterial unter Trizinnphosphat (CAS 15578-32-3), Trikupferphosphat (CAS 7798-23-4), Kupferdiphosphat (CAS 10102-90-6), Kupferhydroxidphosphat (CAS 12158-74-6) und Gemischen davon ausgewählt.

Erfindungsgemäß besonders bevorzugt ist das Absorbermaterial eine Kupferverbindung, wie Trikupferphosphat, Kupferdiphosphat oder Kupferhydroxidphosphat, oder ein Gemisch, welches wenigstens eine Kupferverbindung umfasst. Ganz besonders bevorzugt ist das Absorbermaterial Kupferhydroxidphosphat oder ein Gemisch, welches wenigstens Kupferhydroxidphosphat umfasst.

Die vorgenannten Kupferphosphatverbindungen haben sich als besonders gute Absorptionsmaterialien für UV- und / oder IR-Strahlung erwiesen. Ganz besonders effizient ist Kupferhydroxidphosphat. Es absorbiert ausgezeichnet IR-Strahlung. Diesbezüglich hat sich Kupferhydroxidphosphat als die beste unter den von den Erfindern als Absorbermaterialien untersuchten Metallphosphatverbindungen erwiesen. Insgesamt wird es unter den anorganischen Absorbermaterialien nur noch von ITO (Indium-Zinn-Oxid) übertroffen, das erfindungsgemäß jedoch nicht in Betracht gezogen wird, da es aufgrund des Indiums teuer und gesundheitsgefährdend ist.

Die Aufnahme der erfindungsgemäßen Kupferphosphatverbindungen in Polymermaterialien als Verpackungsmaterial oder andere Handelsprodukte hat weitere erhebliche Vorteile neben der absorbierenden Wirkung für UV- und / oder IR-Strahlung. Verpackungsmaterialien, insbesondere Polymerfolien zum Verpacken von Lebensmitteln, werden üblicherweise vor der Verwendung zur Entkeimung mit Wasserstoffperoxid begast. Das Wasserstoffperoxid zersetzt sich dann in der Regel von selbst, jedoch dauert dies eine gewisse Zeit, so dass es häufig noch nicht vollständig abgebaut ist, wenn das Material für Verpackung von beispielsweise Lebensmitteln zum Einsatz kommt. Restliches Wasserstoffperoxid kann dann seine oxidierende Wirkung mit allen Nachteilen auf die verpackten Lebensmittel ausüben. Dies ist oft gerade das Gegenteil dessen, was mit einer Kunststoffverpackung bezweckt werden soll, nämlich unter anderem ein Schutz der Lebensmittel vor Luftkontakt und somit vor der Oxidationswirkung des Luftsauerstoffs.

Es hat sich überraschend gezeigt, dass die als Absorbtionsmaterialien erfindungsgemäß eingesetzten Verbindungen, insbesondere die Kupferverbindungen, ganz besonders Kupferhydroxidphosphat, eine den Zerfall bzw. die Zersetzung von Peroxiden, wie Wasserstoffperoxid, beschleunigende bzw. katalysierende Wirkung ausübt. Werden Verpackungsmaterialien der erfindungsgemäßen Art mit darin enthaltenen erfindungsgemäßen Kupferverbindungen zum Verpacken von Lebensmitteln verwendet und vorher mit Wasserstoffperoxid begast, so fördert das erfindungsgemäße Material die rasche und in der Regel vollständige Zersetzung des Wasserstoffperoxids, bevor das Verpackungsmaterial zum Einsatz bzw. in Kontakt mit den zu verpackenden Produkten kommt.

Die Aufnahme der erfindungsgemäßen Kupferphosphatverbindungen in kunststoffbasierten Materialien als Verpackungsmaterial oder andere Handelsprodukte hat neben der oben beschriebenen absorbierenden Wirkung für UV- und / oder IR-Strahlung und der weiteren überraschenden Wirkung auf den Zerfall von Wasserstoffperoxid noch eine weitere vorteilhafte Wirkung. Die erfindungsgemäßen Materialien mit eingearbeiteten erfindungsgemäßen Kupferphosphatverbindungen besitzen nämlich meistens auch eine keimhemmende und/oder keimtötende Wirkung. Dies hat erhebliche Vorteile gegenüber herkömmlichen kunststoffbasierten Materialien, insbesondere wenn sie als Verpackungsmaterialien für Lebensmittel eingesetzt werden. Man kann damit beispielsweise die Wahrscheinlichkeit des vorzeitigen Verderbens von Lebensmitteln vermindern. Auch unter dem Aspekt der keimhemmenden und/oder keimtötenden Wirkung eignen sich die erfindungsgemäßen Materialien zur Herstellung von Medizinprodukten oder Kunststoffrohren, bei denen eine Verkeimung besonders unerwünscht ist.

Die aufgefundene keimhemmende und/oder keimtötende Wirkung der erfindungemäßen kunststoffbasierenden Materialien mit eingearbeiteten erfindungsgemäßen Kupferphosphatverbindungen war auch deshalb überraschend, weil die Kupferphosphatverbindungen in der Polymermatrix größtenteils, d. h. bis an die äußerste Oberfläche des Materials heran, von dem Polymermaterial umschlossen und damit von den Produkten bzw. den Keimen darauf ferngehalten sind. In unmittelbarer Oberflächennähe befindet sich daher scheinbar nur ein sehr geringer wirksamer Anteil der Kupferverbindungen. Die nun gefundene Wirkung war daher nicht zu erwarten.

Ein erheblicher Vorteil der nun gefundenen keimhemmenden und/oder keimtötenden Wirkung der erfindungemäßen Polymermaterialien mit eingearbeiteten erfindungsgemäßen Kupferphosphatverbindungen liegt auch darin, dass die Kupferphosphatverbindungen nun die heute in großem Umfang aufgrund ihrer keimhemmenden und/oder keimtötenden Wirkung zum gleichen Zweck eingesetzten Silberverbindungen ersetzen kann. Silberverbindungen sind zwar diesbezüglich hoch wirksam, haben aber den Nachteil, dass sie zunehmend teurer werden und bei Aufnahme in den Körper persistent sind, d. h. im Körper verbleiben und nicht oder nur langsam abgebaut oder ausgeschieden werden. Aufgenommenes Kupfer hingegen ist nicht persistent, es wird über Leber/Galle aus dem Körper ausgeschieden.

Die keimhemmende und/oder keimtötende Wirkung von metallischem Kupfer ist bekannt. Allerdings hat sich überraschend gezeigt, dass zum Erzielen einer entsprechenden keimhemmenden Wirkung bei Einarbeitung in eine Polymermatrix eine erheblich geringere Menge bzw. Dosierung der erfindungsgemäßen Kupferphosphatverbindungen erforderlich ist als bei Verwendung von metallischem Kupfer. Im Zusammenhang mit den hierin beschriebenen Anwendungsgebieten der vorliegenden Erfindung haben die erfindungsgemäßen Kupferphosphatverbindungen, insbesondere Kupferhydroxidphosphat, den weiteren Vorteil, dass sie eingearbeitet in die Polymermatrix hell bzw. farblos sind, wohingegen metallisches Kupfer rot ist und das Polymermaterial entsprechend einfärben würde.

In einer weiteren Ausführungsform der Erfindung liegt das Absorbermaterial in der Polymermatrix in einer Menge von 0,0005 bis 10 Gew.-% vor. Alternativ liegt das Absorbermaterial in der Polymermatrix in einer Menge von 0,05 bis 5 Gew.-% oder von 0,5 bis 3 Gew.-% oder von 1 bis 2 Gew.-% vor. Zweckmäßigerweise ist das Absorbermaterial in der Polymermatrix fein verteilt, dispergiert oder gelöst. Je feiner und je feinteiliger das Material in der Polymermatrix verteilt ist, desto geringer ist die Gefahr von Trübung oder Verfärbung des Polymermaterials aufgrund des Absorbermaterials, insbesondere wenn höhere Mengen des Absorbermaterials eingesetzt werden, um eine besonders hohe Wirkung zu erzielen. Die Menge an Absorbermaterial in der Polymermatrix beeinflusst unter anderem die Absorptionsfähigkeit des Materials. Je nach Dosierung kann eine annähernd vollständige Absorption des Lichtes im UV-Bereich und / oder IR-Bereich erreicht werden.

In einer weiteren Ausführungsform der Erfindung ist die Polymermatrix ein Biopolymer, vorzugsweise aus Stärke, Cellulose, anderen Polysacchariden, Polymilchsäure oder Polyhydroxyfettsäure, oder ein thermoplastisches Polymer, vorzugsweise ausgewählt aus der Gruppe, bestehend aus Polyvinylbutyral (PVB), Polypropylen (PP), Polyethylen (PE), Polyamid (PA), Polybutylenterephthalat (PBT), Polyethylenterephthalat (PET), Polyester, Polyphenylenoxid, Polyacetal, Polymethacrylat, Polyoxymethylen, Polyvinylacetal, Polystyrol, Acryl-Butadien-Styrol (ABS), Acrylnitril-Styrol-Acrylester (ASA), Polycarbonat, Polyethersulfon, Polyetherketon, Polyvinylchlorid, thermoplastischem Polyurethan und/oder deren Copolymeren und/oder Mischungen davon.

In einer weiteren Ausführungsform der Erfindung weist das Absorbermaterial eine mittlere Teilchengröße (d50) von weniger als 20 µm auf. Vorzugsweise beträgt die mittlere Teilchengröße (d50) weniger als 10 µm, besonders bevorzugt weniger als 200 nm, ganz besonders bevorzugt weniger als 60 nm oder 50 nm oder 40 nm. Je geringer die Teilchengröße ist, desto geringer ist die Gefahr von Trübung oder Verfärbung des Polymermaterials aufgrund des Absorbermaterials. Gleichzeitig hat das Absorbermaterial eine umso größere spezifische Oberfläche je feinteiliger es ist, wodurch die zur Verfügung stehende wirksame Oberfläche und damit in der Regel auch die Wirkung zunimmt.

In einer weiteren Ausführungsform der Erfindung liegt das Polymermaterial als Folie, Lage oder dünne Schicht mit einer Dicke im Bereich von 1 µm bis 20 mm oder im Bereich von 50 µm bis 10 mm oder im Bereich von 100 µm bis 5 mm oder im Bereich von 200 µm bis 1 mm vor. Die Lagen- oder Schichtdicke hängt in erster Linie von den gewünschten mechanischen und optischen Eigenschaften sowie den erforderlichen Barriereeigenschaften und der benötigten Stabilität des kunststoffbasierten Materials ab.

In einer weiteren Ausführungsform der Erfindung liegt in der Polymermatrix ein Gemisch von wenigstens zwei Absorbermaterialien vor. Hierdurch können beispielsweise die Wirkungen einzelner erfindungsgemäßer Absorbermaterialien additiv oder synergistisch kombiniert bzw. zusammengeführt werden. Beispielsweise können verschiedene Absorbermaterialien unterschiedlich stark in verschiedenen Bereichen des Spektrums absorbieren, so dass man die Absorption über bestimmte Spektrenbereiche besser durch eine abgestimmte Kombination von Absorbermaterialien erreicht.

In einer weiteren Ausführungsform der Erfindung besitzt das erfindungsgemäße Strahlung absorbierendes Polymermaterial für ultraviolette Strahlung (UV) über den Wellenlängenbereich von 200 bis 380 nm, vorzugsweise von 200 bis 400 nm, einen Transmissionsgrad von I_{T}/I₀ von ≤ 0,60, vorzugsweise ≤ 0,50, besonders bevorzugt ≤ 0,30, wobei l₀ = Intensität der auftreffenden Strahlung und I_{T} = Intensität der hindurchtretenden Strahlung ist.

In einer weiteren Ausführungsform der Erfindung besitzt das erfindungsgemäße Strahlung absorbierendes Polymermaterial für infrarote Strahlung (IR / NIR) über den Wellenlängenbereich von 900 bis 1500 nm einen Transmissionsgrad I_{T}/I₀ von ≤ 0,50, vorzugsweise ≤ 0,30, besonders bevorzugt ≤ 0,25, wobei I₀ = Intensität der auftreffenden Strahlung und l_{T} = Intensität der hindurchtretenden Strahlung ist.

In einer weiteren Ausführungsform der Erfindung besitzt das erfindungsgemäße Strahlung absorbierendes Polymermaterial für sichtbares Licht (VIS) über den Wellenlängenbereich von 400 bis 900 nm einen Transmissionsgrad I_{T}/I₀ von > 0,60, vorzugsweise > 0,70, besonders bevorzugt > 0,80, wobei I₀ = Intensität der auftreffenden Strahlung und I_{T} = Intensität der hindurchtretenden Strahlung ist.

In einer weiteren Ausführungsform der Erfindung ist das erfindungsgemäße Strahlung absorbierende, kunststoffbasierende Material als Folie, Lage oder dünne Schicht mit einer Dicke im Bereich von 1 µm bis 3 mm ausgebildet und liegt mit wenigstens einer weiteren Lage in einem mehrlagigen Aufbau vor, wobei die wenigstens eine weitere Lage ausgewählt ist unter einer folien- oder lagenförmigen Polymermatrix mit oder ohne Absorbermaterial, einer Aluminiumlage und/oder einer Papier- oder Papplage.

Die Erfindung umfasst auch die Verwendung des erfindungsgemäßen Strahlung absorbierenden Polymermaterials zur Herstellung von Verpackungsmaterialien für Handelsprodukte, vorzugsweise Verpackungsmaterialien für Lebensmittel, kosmetische Mittel oder Medizinprodukte.

Die erfindungsgemäßen Absorbermaterialien haben gegenüber organischen UV- und IR-Absorbern den Vorteil, dass sie thermisch erheblich stabiler sind und daher bei den Herstellungs- und Verarbeitungstemperaturen der Polymermaterialien, in welche sie eingearbeitet werden, nicht zerstört werden.

Die erfindungsgemäßen Strahlung absorbierenden, kunststoffbasierenden Materialien haben einen weiteren Vorteil, dass sie aufgrund der Absorptionsfähigkeit für IR-Strahlung mit entsprechenden IR-Quellen bzw. IR-Strahlern gezielt erhitzt werden können, wodurch sich besondere Möglichkeiten für eine Verbesserung der Formbarkeit und Verarbeitbarkeit ergeben. Unter anderem lässt sich das Polymermaterial sehr schnell und energiesparend erwärmen und formen. Dies kann sowohl bei der Herstellung als auch bei der Weiterverarbeitung von Vorteil sein.

Die Messung der Strahlungsabsorption, d. h. der UV-Absorption, der IR-Absorption und der Absorption bzw. Transmission im sichtbaren Wellenlängenbereich, erfolgt vorteilhaft mit einem UV-Vis-VIR-Spektrophotometer der Firma Varian, Modell Cary 5000 bei bestimmten Wellenlängen oder über den gesamten interessierenden Wellenlängenbereich.

Die Transparenz bzw. der Transmissionsgrad der Polymermatrix wird einerseits durch die Auswahl des Absorbermaterials, andererseits aber auch durch die eingesetzte Menge bzw. Konzentration und die Teilchengröße des eingesetzten Absorbermaterials bestimmt bzw. beeinflusst. Eine allgemein gültige ideale Konzentration kann nicht angegeben werden, da die Transparenz auch vom jeweils verwendeten Polymermaterial sehr unterschiedlich beeinflusst werden kann. Die Einstellung der optimalen Konzentration eines ausgewählten Absorbermaterials liegt jedoch im Können des Durchschnittsfachmanns auf dem Gebiet und ist in Abhängigkeit von der gewünschten Transparenz durch eine überschaubare Anzahl von Versuchen durchzuführen. Die Konzentration des Absorbermaterials ist dabei so zu wählen, dass in der resultierenden Polymermatrix eine möglichst hohe Absorption im IR-Berich und/oder UV-Bereich des Spektrums bei gleichzeitig hohem Transmissionsgrad von mindestens 0,50 im sichtbaren Spektralbereich erfolgt.

Die Erfindung wird nachfolgend anhand einiger nicht beschränkender Ausführungsbeispiele weiter erläutert.

### Beispiele

### Beispiel 1:

Ein PP Granulat wurde mit 1 Gew.-% eines Kupferhydroxidphosphats (KHP) (mittlere Teilchengröße d50 = 2,27 µm) versetzt. Die Mischung wurde in einen beheizbaren Kneter (Brabender Plastograph) gegeben. Dabei wurde das Absorbermaterial in dem aufgeschmolzenen Polymermaterial gleichmäßig verteilt bzw. in das Material eingearbeitet.

Das so hergestellte kunststoffbasierende Material wurde zu einer dünnen Platte mit einer Dicke von 500 µm ausgeformt. Mit einem Spektrophotometer (Varian Cary 5000) wurde die Strahlungsabsorption der Platte bestimmt. Im UV-Bereich unter 380 nm wurde eine vollständige Strahlungsabsorption gemessen. Auch im Bereich ab 800 nm und darüber (Nahinfrarotbereich) lag der Transmissionsgrad unter 0,03, d.h. auch hier wurde eine fast vollständige Absorption gemessen. Im Bereich der Wellenlängen des sichtbaren Lichts war der Transmissionsgrad >0,50 und wurde somit durch das Absorbermaterial nicht wesentlich beeinträchtigt.

### Beispiel 2:

Ein PE Granulat wurde mit 1 Gew.-% eines Kupferpyrophosphates und 1 Gew.-% eines Kupferorthophosphates versetzt. Die Kupferphosphatverbindungen wurden mittels Extrusion in den Kunststoff eingearbeitet und gleichmäßig verteilt.

Das so hergestellte Polymermaterial wurde zu einer dünnen Platte mit einer Dicke von 600 µm ausgeformt. Mit einem Spektrophotometer (Varian Cary 5000) wurde die Strahlungsabsorption der Platte bestimmt. Im UV-Bereich unter 400 nm wurde eine sehr hohe Strahlungsabsorption (Transmissionsgrad <0,10) der mit Kupferphosphaten versetzten Platte gemessen.

Auch im Bereich ab 850 nm und darüber (Nahinfrarotbereich) lag der Transmissionsgrad unter 0,1. Wie gewünscht ist die Transparenz im Bereich der visuellen Wellenlängen hoch (Transmissionsgrad etwa 0,8).

### Beispiel 3:

Ein PET-Granulat wurde mit 1 Gew.-% eines KHP (Kupferhydroxidphosphat) versetzt. Das Kupferhydroxidphosphat wurde mittels Extrusion in den Kunststoff eingearbeitet und gleichmäßig verteilt.

Das so hergestellte Polymermaterial wurde zu einer dünnen Platte mit einer Dicke von 600 µm ausgeformt. Mit einem Spektrophotometer (Varian Carry 5000) wurde die Strahlungsabsorption der Platte bestimmt. Im UV-Bereich unter 400 nm wurde eine sehr hohe Strahlungsabsorption über 90% gemessen. Auch im Bereich ab 850 nm und darüber (Nahinfrarotbereich) lag der Transmissionsgrad unter 0,1.

Wie gewünscht ist die Transparenz im Bereich der visuellen Wellenlängen hoch (Transmissionsgrad >0,80).

## Patentansprüche

1. Verwendung eines Strahlung absorbierenden, kunststoffbasierenden Materials zur Herstellung von Verpackungsmaterialien für Lebensmittel, kosmetische Mittel, Arzneimittel oder Medizinprodukte, wobei das Material
- als Folie, Lage oder dünne Schicht mit einer Dicke im Bereich von 1 µm bis 1 mm ausgebildet ist,
- aus einer Polymermatrix mit einem darin enthaltenen Absorbermaterial oder Gemisch von Absorbermaterialien besteht, wobei das Absorbermaterial oder Gemisch von Absorbermaterialien unter Phosphaten, kondensierten Phosphaten, Phosphonaten, Phosphiten und gemischten Hydroxid-Phosphat-Oxoanionen von Kupfer (Cu), Zinn (Sn), Calcium (Ca) und/oder Eisen (Fe) ausgewählt ist und in der Polymermatrix in einer Menge von 0,0005 bis 3 Gew.-% fein verteilt, dispergiert oder gelöst vorliegt,
- für ultraviolette Strahlung (UV) über den Wellenlängenbereich von 200 bis 380 nm einen Transmissionsgrad I_{T}/I₀ von s 0,60 besitzt,
für infrarote Strahlung (IR / NIR) über den Wellenlängenbereich von 900 bis 1500 nm einen Transmissionsgrad I_{T}/I₀ von ≤ 0,30 besitzt,
wobei I₀ = Intensität der auftreffenden Strahlung und I_{T} = Intensität der hindurchtretenden Strahlung ist,

2. Verwendung nach Anspruch 1, **dadurch gekennzeichnet, dass** das Material für ultraviolette Strahlung (UV) über den Wellenlängenbereich von 200 bis 380 nm, vorzugsweise von 200 bis 400 nm, einen Transmissionsgrad I_{T}/I₀ von ≤ 0,50, vorzugsweise ≤ 0,30 besitzt.

3. Verwendung nach einem der vorausgehenden Ansprüche, **dadurch gekennzeichnet, dass** das Material für infrarote Strahlung (IR / NIR) über den Wellenlängenbereich von 900 bis 1500 nm einen Transmissionsgrad I_{T}/I₀ von ≤ 0,25 besitzt.

4. Verwendung nach einem der vorausgehenden Ansprüche, **dadurch gekennzeichnet, dass** das Material für sichtbares Licht (VIS) über den Wellenlängenbereich von 400 bis 900 nm einen Transmissionsgrad I_{T}/I₀ von > 0,60, vorzugsweise > 0,70, besonders bevorzugt > 0,80 besitzt.

5. Verwendung nach einem der vorausgehenden Ansprüche, **dadurch gekennzeichnet, dass** das Absorbermaterial unter Trizinnphosphat (CAS 15578-32-3), Trikupferphosphat (CAS 7798-23-4), Kupferdiphosphat (CAS 10102-90-6), Kupferhydroxidphosphat (CAS 12158-74-6) und Gemischen davon ausgewählt ist.

6. Verwendung nach einem der vorausgehenden Ansprüche, **dadurch gekennzeichnet, dass** das Absorbermaterial in der Polymermatrix in einer Menge von 0,0005 bis 2 Gew.-% fein verteilt, dispergiert oder gelöst vorliegt.

7. Verwendung nach einem der vorausgehenden Ansprüche, **dadurch gekennzeichnet, dass** die Polymermatrix ein Biopolymer, vorzugsweise aus Stärke, Cellulose, anderen Polysacchariden, Polymilchsäure oder Polyhydroxyfettsäure, oder ein thermoplastisches Polymer ist, vorzugsweise ausgewählt aus der Gruppe, bestehend aus Polyvinylbutyral (PVB), Polypropylen (PP), Polyethylen (PE), Polyamid (PA), Polybutylenterephthalat (PBT), Polyethylenterephthalat (PET), Polyester, Polyphenylenoxid, Polyacetal, Polymethacrylat, Polyoxymethylen, Polyvinylacetal, Polystyrol, Acryl-Butadien-Styrol (ABS), Acrylnitril-Styrol-Acrylester (ASA), Polycarbonat, Polyethersulfon, Polyetherketon, Polyvinylchlorid, thermoplastischem Polyurethan und/oder deren Copolymeren und/oder Mischungen davon.

8. Verwendung nach einem der vorausgehenden Ansprüche, **dadurch gekennzeichnet, dass** das Absorbermaterial eine mittlere Teilchengröße (d50) von weniger als 20 µm, vorzugsweise weniger als 10 µm, besonders bevorzugt weniger als 200 nm, ganz besonders bevorzugt weniger als 60 nm oder 50 nm oder 40 nm aufweist.

9. Verwendung nach einem der vorausgehenden Ansprüche, **dadurch gekennzeichnet, dass** in der Polymermatrix ein Gemisch von wenigstens zwei Absorbermaterialien vorliegt.

10. Verwendung nach einem der vorausgehenden Ansprüche, **dadurch gekennzeichnet, dass** das Absorbermaterial oder das Gemisch von Absorbermaterialien keimhemmende und/oder keimtötende Wirkung aufweist.

11. Verwendung nach einem der vorausgehenden Ansprüche, **dadurch gekennzeichnet, dass** in der Polymermatrix zusätzlich wenigstens ein keimhemmendes und/oder keimtötendes Mittel fein verteilt, dispergiert oder gelöst vorliegt.

12. Verwendung nach einem der vorausgehenden Ansprüche, **dadurch gekennzeichnet, dass** das als Folie, Lage oder dünne Schicht ausgebildete kunststoffbasierende Material mit wenigstens einer weiteren Lage in einem mehrlagigen Aufbau vorliegt, wobei die wenigstens eine weitere Lage ausgewählt ist unter einer folien- oder lagenförmigen Polymermatrix mit oder ohne Absorbermaterial, einer Aluminiumlage und/oder einer Papier-oder Papplage.

## Claims

1. Use of a radiation-absorbing, plastic-based material for the production of packaging materials for foodstuffs, cosmetic agents, medicaments or medical products, wherein the material
- is in the form of a film, layer or thin sheet of a thickness in the range of 1 µm to 1 mm,
- comprises a polymer matrix with an absorber material or mixture of absorber materials contained therein, wherein the absorber material or mixture of absorber materials is selected from phosphates, condensed phosphates, phosphonates, phosphites and mixed hydroxide-phosphate-oxoanions of copper (Cu), tin (Sn), calcium (Ca) and/or iron (Fe) and is present in finely distributed, dispersed or dissolved form in an amount of 0.00005 to 3 % by weight in the polymer matrix,
- has a transmittance I_{T/}I₀ of ≤ 0.60 for ultraviolet radiation (UV) over the wavelength range of 200 to 380 nm, and
- has a transmittance I_{T}/I₀ of ≤ 0.30 for infrared radiation (IR/NIR) over the wavelength range of 900 to 1500 nm,
wherein I₀ = intensity of the incident radiation and IT= intensity of the penetrating radiation.

2. Use according to claim 1 **characterised in that** the material has a transmittance I_{T}/I₀ of ≤ 0.50, particularly preferably ≤ 0.30 for ultraviolet radiation (UV) over the wavelength range of 200 to 380 nm.

3. Use according to one of the preceding claims **characterised in that** the material has a transmittance I_{T}/I₀ of ≤ 0.25 for infrared radiation (IR/NIR) over the wavelength range of from 900 to 1500 nm.

4. Use according to one of the preceding claims **characterised in that** the material has a transmittance I_{T}/I₀ of > 0.60, preferably > 0.70, particularly preferably > 0.80 for visible light (VIS) over the wavelength range of 400 to 900 nm.

5. Use according to one of the preceding claims **characterised in that** the absorber material is selected from tritin phosphate (CAS 15578-32-3), tricopper diphosphate (CAS 7798-23-4), copper diphosphate (CAS 10102-90-6), copper hydroxide phosphate (CAS 12158-74-6) and mixtures thereof.

6. Use according to one of the preceding claims **characterised in that** the absorber material is present in finely distributed, dispersed or dissolved form in the polymer matrix in an amount of 0.0005 to 2% by weight.

7. Use according to one of the preceding claims **characterised in that** the polymer matrix is a biopolymer, preferably comprising starch, cellulose, other polysaccharides, polylactic acid or polyhydroxy fatty acid, or a thermoplastic polymer, preferably selected from the group consisting of polyvinyl butyral (PVB), polypropylene (PP), polyethylene (PE), polyamide (PA), polybutylene terephthalate (PBT), polyethylene terephthalate (PET), polyester, polyphenylene oxide, polyacetal, polymethacrylate, polyoxymethylene, polyvinyl acetal, polystyrene, acryl-butadiene-styrene (ABS), acrylonitrile-styrene-acrylester (ASA), polycarbonate, polyethersulphone, polyetherketone, polyvinyl chloride, thermoplastic polyurethane and/or their copolymers and/or mixtures thereof.

8. Use according to one of the preceding claims **characterised in that** the absorber material has an average particle size (d50) of less than 20µm, preferably less than 10 µm, particularly preferably less than 200 nm, quite particularly preferably less than 60 nm or 50 nm or 40 nm.

9. Use according to one of the preceding claims **characterised in that** a mixture of at least two absorber materials is present in the polymer matrix.

10. Use according to one of the preceding claims **characterised in that** the absorber material or the mixture of absorber materials has a bacteriostatic and/or sterilizing effect.

11. Use according to one of the preceding claims **characterised in that** in addition at least one bacteriostatic and/or sterilizing agent is present in finely distributed, dispersed or dissolved form in the polymer matrix.

12. Use according to one of the preceding claims **characterised in that** the plastic-based material in the form of a film, layer or thin sheet is present with at least one further layer in a multi-ply structure, wherein the at least one further layer is selected from a film-type or layer-type polymer matrix with or without absorber material, an aluminium layer and/or a paper or cardboard layer.

## Revendications

1. Utilisation d'un matériau à base de matière plastique, absorbant les rayonnements, pour la fabrication de matériaux d'emballage pour produits alimentaires, produits cosmétiques, médicaments ou dispositifs médicaux, dans laquelle le matériau
- est configuré sous la forme d'une feuille, d'une couche ou d'une couche mince ayant une épaisseur comprise dans la plage de 1 µm à 1 mm,
- est constitué d'une matrice polymère à l'intérieur de laquelle est contenu un matériau absorbant, ou un mélange de matériaux absorbants, le matériau absorbant ou le mélange de matériaux absorbants étant choisi parmi les phosphates, les phosphates condensés, les phosphonates, les phosphites et les oxoanions hydroxyde-phosphate mixtes de cuivre (Cu), d'étain (Sn), de calcium (Ca) et/ou de fer (Fe), et se présentant sous une forme finement répartie, dispersée ou dissoute dans la matrice polymère en une quantité de 0,0005 à 3 % en poids,
- présente, pour un rayonnement ultraviolet (UV) sur la gamme de longueurs d'ondes de 200 à 380 nm, un facteur de transmission I_{T}/I_{O} ≤ 0,60,
présente, pour un rayonnement infrarouge (IR/NIR) sur la gamme de longueurs d'ondes de 900 à 1500 nm, un facteur de transmission I_{T}/I_{O} ≤ 0,30,
I_{O} étant l'intensité du rayonnement incident et I_{T} étant l'intensité du rayonnement transmis.

2. Utilisation selon la revendication 1, **caractérisée en ce que** le matériau présente, pour un rayonnement ultraviolet (UV) sur la gamme de longueurs d'ondes de 200 à 480 nm, de préférence de 200 à 400 nm, un facteur de transmission I_{T}/I_{O} ≤ 0,50, de préférence ≤ 0,30.

3. Utilisation selon l'une des revendications précédentes, **caractérisée en ce que** le matériau présente, pour un rayonnement infrarouge (IR/NIR) sur la gamme de longueurs d'ondes de 900 à 1500 nm, un facteur de transmission I_{T}/I_{O} ≤ 0,25.

4. Utilisation selon l'une des revendications précédentes, **caractérisée en ce que** le matériau présente, pour une lumière visible (VIS) sur la gamme de longueurs d'ondes de 400 à 900 nm, un facteur de transmission I_{T}/I_{O} > 0,60, de préférence > 0,70.

5. Utilisation selon l'une des revendications précédentes, **caractérisée en ce que** le matériau absorbant est choisi parmi le phosphate tristannique (CAS 15578-32-3), le phosphate tricuprique (CAS 7798-23-4), le diphosphate de cuivre (CAS 10102-90-6), l'hydroxyde-phosphate de cuivre (CAS 12158-74-6) et des mélanges de ceux-ci.

6. Utilisation selon l'une des revendications précédentes, **caractérisée en ce que** le matériau absorbant se présente sous une forme finement répartie, dispersée ou dissoute dans la matrice polymère en une quantité de 0,0005 à 2 % en poids.

7. Utilisation selon l'une des revendications précédentes, **caractérisée en ce que** la matrice polymère est un biopolymère, de préférence constitué d'amidon, de cellulose, d'autres polysaccharides, de poly(acide lactique) ou d'un poly(hydroxyacide gras), ou est un polymère thermoplastique de préférence choisi dans le groupe composé du polyvinylbutyral (PVB), du polypropylène (PP), du polyéthylène (PE), du polyamide (PA), du poly(téréphtalate de butylène) (PBT), du poly(téréphtalate d'éthylène) (PET), du polyester, du poly(oxyde de phénylène), du polyacétal, du polyméthacrylate, du polyoxyméthylène, du polyvinylacétal, du polystyrène, de l'acryl-butadiène-styrène (ABS), de l'acrylonitrile-styrène-acrylate (ASA), du polycarbonate, de la polyéthersulfone, de la polyéthercétone, du poly(chlorure de vinyle), du polyuréthanne thermoplastique et/ou de leurs copolymères et/ou mélanges.

8. Utilisation selon l'une des revendications précédentes, **caractérisée en ce que** le matériau absorbant présente une granulométrie moyenne (d50) inférieure à 20 µm, de préférence inférieure à 10 µm, d'une manière particulièrement préférée inférieure à 200 nm, d'une manière tout particulièrement préférée inférieure à 60 nm, ou 50 nm, ou 40 nm.

9. Utilisation selon l'une des revendications précédentes, **caractérisée en ce qu'**un mélange d'au moins deux matériaux absorbants est présent dans la matrice polymère.

10. Utilisation selon l'une des revendications précédentes, **caractérisée en ce que** le matériau absorbant ou le mélange de matériaux absorbants présente un effet bactériostatique et/ou bactéricide.

11. Utilisation selon l'une des revendications précédentes, **caractérisée en ce qu'**en outre au moins un agent bactériostatique et/ou bactéricide est présent sous une forme finement répartie, dispersée ou dissoute dans la matrice polymère.

12. Utilisation selon l'une des revendications précédentes, **caractérisée en ce que** le matériau à base de matière plastique configuré sous forme d'une feuille, d'une couche ou d'une couche mince se présente sous une forme multicouche, avec au moins une couche supplémentaire, la ou les couches supplémentaires étant choisies parmi une matrice polymère en forme d'une feuille ou d'une couche, avec ou sans matériau absorbant, une couche d'aluminium et/ou une couche de papier ou de carton.
